# EUROPÄISCHE PATENTSCHRIFT

(11) **EP 0 714 044 B1**
(45) Veröffentlichungstag und Bekanntmachung des Hinweises auf die Patenterteilung: **05.06.2002**
(21) Anmeldenummer: 95250292.0
(22) Anmeldetag: 27.11.1995
(51) Int. Cl.: G03B 17/10, G03B 19/20

(54) **Laufbildkamera**
Motion picture camera
Caméra cinématographique

(30) Priorität: 25.11.1994 DE 4443255
(43) Veröffentlichungstag der Anmeldung: 29.05.1996
(73) Patentinhaber: ARNOLD & RICHTER CINE TECHNIK GMBH & CO. BETRIEBS KG, 80701 München (DE)
(72) Erfinder: Köhler, Hanns, Prof. Dr., D-81371 München (DE); Koppetz, Michael, Dipl.-Ing., D-81669 München (DE); Jacoby, Hans-Dieter, Dr., D-85591 Vaterstetten (DE)
(74) Vertreter: Ninnemann, Detlef, Dipl.-Ing.

(56) Entgegenhaltungen:
- EP-A- 0 297 608
- EP-A- 0 475 544
- GB-A- 2 054 899
- GB-A- 2 277 360
- US-A- 3 606 233

## Beschreibung

Die Erfindung betrifft eine Laufbildkamera nach dem Oberbegriff des Anspruchs 1.

Geräuschreduzierte Laufbildkameras bestehen im wesentlichen aus zwei Hauptbaugruppen. Zum einen aus dem Kamera-Außengehäuse mit einer Objektivbefestigung zur Aufnahme einer auswechselbaren Aufnahmeoptik und zum anderen aus dem Kameraskelett bzw. der Innenkamera, die alle für den Transport eines Laufbildfilmes von einer Filmabwickelspule zu einer Filmaufwickelspule notwendigen Motor- und Getriebeeinrichtungen besitzt und im allgemeinen mit einem Bildfenster, einer beweglichen Blendeneinrichtung und einer Mattscheibe ausgestattet ist.

Im Betrieb der Laufbildkamera erzeugen die beweglichen Einrichtungen der Innenkamera mechanische Schwingungen und Geräusche, die auf das Kamera-Außengehäuse übertragen werden. Da diese Schwingungen in der Innenkamera selbst nicht ausgeschlossen werden können, müssen sie zum einen auf ein Mindestmaß reduziert und zum anderen ihre Übertragung auf das Kamera-Außengehäuse verhindert werden.

Zur Geräusch- und Schwingungsisolation von Laufbildkameras werden in unterschiedlichen Ausführungen und Anordnungen Dämpfungselemente aus elastomeren Materialien vorgesehen, mit denen die Innenkamera mit dem Außengehäuse verbunden wird. Dabei muß sichergestellt sein, daß das Auflagemaß, das dem Abstand zwischen der am Außengehäuse festgelegten Objektivebene und der an der Innenkamera festgelegten Bildebene entspricht, konstant ist, um Bildunschärfen und/oder Bildverschiebungen auszuschließen. Die Eigenschaften der Dämpfungselemente bestimmen dabei das Maß der erreichbaren Geräuschreduzierung einerseits und der Stabilität des Auflagemaßes zwischen der mit dem Kameragehäuse verbundenen Objektivbefestigung und dem mit der Innenkamera verbundenen Bildfenster andererseits.

Dämpfungselemente mit einer hohen Steifigkeit besitzen eine relativ hohe Stabilität und gewährleisten so die Einhaltung eines weitestgehend konstanten Auflagemaßes, ihre geräuschund schwingungsisolierenden Wirkungen sind jedoch nicht sehr groß. Demgegenüber garantieren Dämpfungselemente mit einer geringen Steifigkeit eine geringe Geräusch- und Schwingungsübertragung, ihre zwangsweise geringe mechanische Stabilität erfordert aber Zusatzeinrichtungen zur Sicherung eines annähernd konstanten Auflagemaßes. Ein häufiges Nachjustieren ist daher unumgänglich. Insbesondere bei mehr oder weniger plötzlichen Bewegungen der Laufbildkamera, wie bei Schwenks oder Kamerafahrten, kommt es zu Veränderungen des vorgegebenen Auflagemaßes, die zu Bildunschärfen und/oder Bildverschiebungen führen.

Aus der DE 30 49 150 C2 ist eine geräuschisolierte Filmaufnahmekamera bekannt, die eine Rückstelleinrichtung zur Kompensation einer Lageänderung der Innenkamera in bezug auf das Kamera-Außengehäuse aufweist. Die Rückstelleinrichtung besteht aus einem zweiarmigen Hebel, der in einem Drehpunkt in einem mit dem Kamera-Außengehäuse verbundenen Verbindungsstück gelagert ist, während der eine Hebelarm drehbar an der Innenkamera festgelegt und der andere Hebelarm durch eine im Sinne der Lageveränderung der Innenkamera wirkende Rückstellkraft beaufschlagbar ist.

Mit Hilfe solcher als Kompensationseinrichtungen ausgebildeter Zusatzeinrichtungen können zwar Lageänderungen der Innenkamera in bezug auf die Objektivbefestigung weitgehend kompensiert werden, jedoch kann auch diese Einrichtung nicht verhindern, daß kurzfristig Verschiebungen des Auflagemaßes auftreten. Darüber hinaus ist eine derartige Kompensationseinrichtung verhältnismäßig aufwendig und erfordert zusätzlichen Platzbedarf in der Filmaufnahmekamera.

Aus der US-A-4 174 157 ist eine geräusch- und schwingungsabsorbierende Befestigung der Innenkamera gegenüber dem Kamera-Außengehäuse unter Verwendung von Dämpfungselementen bekannt. Die schallabsorbierenden Dämpfungselemente weisen einen in das Kameragehäuse einschraubbaren Außengewindestift auf, der von einer Innengewindehülse aufgenommen wird, zwischen der und einer Außengewinde-Lagerbuchse ein elastomeres Einsatzstück vorgesehen ist. Wird nach dem Lösen des Außengewindestiftes die Außengewinde-Lagerbuchse innerhalb der Innengewindehülse verdreht, so ist eine seitliche Ausrichtung der Innenkamera und der beweglichen Kamerateile in bezug auf das Kameragehäuse und damit auf die Objektivbefestigung möglich.

Aus der US-A-4 121 886 ist eine Lösung zur Geräusch- und Schwingungsdämpfung von Laufbildkameras bekannt, bei der die geräuschverursachenden Baugruppen auf einer Montageplatte angeordnet sind, die nicht in direktem Kontakt mit dem Kamera-Außengehäuse steht, sondern über Dämpfungselemente mit dem Kameragehäuse verbunden ist, während das Außengehäuse selbst doppelwandig, schallisoliert ausgebildet ist.

Der Nachteil beider Lösungen besteht vor allem darin, daß ein ständiges Nachjustieren an den schallabsorbierenden Verbindungselementen notwendig ist, um das Auflagemaß zwischen Objektivebene und Bildebene zu sichern. Die zu verminderten Bildqualitäten führende Bildverschiebung und Bildunschärfe infolge von Veränderungen des Auflagemaßes bei Schwenkbewegungen der Laufbildkamera kann nicht ausgeschlossen werden.

Aus der DE-U-86 20 783 ist eine Laufbild-Filmaufnahmekamera bekannt, bei der zur Unterdrückung des Körperschalls den Körperschall dämpfende Verbindungselemente vorgesehen sind, die durch eine Zusammensetzung aus unterschiedlich harten (Anschläge aus Methylmetacrylat) und weichen (gummiartige Zwischenlagen) Materialien einen Kompromiß zwischen der Körperschalldämpfung und der notwendigen Maßhaltigkeit des Auflagemaßes bilden. Durch Verspannung der gummiartigen Zwischenlagen kann die gewünschte Stärke der Maßhaltigkeit eingestellt werden. Damit bewirkt die aus dieser Druckschrift bekannte Anordnung mit aus unterschiedlichen Materialien zusammengesetzten Verbindungselementen eine verbesserte Dämpfung bei weitgehender Konstanz des Auflagemaßes.

Aus der EP 0 475 544 A1 ist eine Vorrichtung zur Geräuschisolation von Laufbildkameras bekannt, bei der die schallschützende Abstützung des Kameraskeletts im Kameragehäuse durch schallisolierende Verbindungselemente erfolgt, die eine richtungsabhängige Eigensteifigkeit mit hoher Steifigkeit in einer Richtung senkrecht zur Bildebene des Kameraskeletts sowie mit geringer Steifigkeit in einer Ebene parallel zur Bildebene aufweisen. Mit dieser richtungsabhängigen Eigensteifigkeit wird zum einen die für die Schallisolation geforderte weiche Aufhängung des Kameraskeletts im Kameragehäuse und zum anderen die für die Einhaltung eines konstanten Auflagemaßes erforderliche harte Steifigkeit der Verbindungselemente in der Ebene senkrecht zum Auflagemaß eingehalten. Durch zusätzliche Maßnahmen, wie Anordnung der Verbindungselemente mit richtungsabhängiger Eigensteifigkeit zwischen der Frontseite des Kameraskeletts und der Frontseite des Kameragehäuses und eines Verbindungselementes zwischen der Rückseite des Kameraskeletts und der Rückseite des Kameragehäuses, das bei hoher Elastizität eine große Vorspannkraft zwischen dem Kameraskelett und dem Kameragehäuse ausübt, kann die geräuschisolierende Wirkung bei gleichzeitiger Konstanz des Auflagemaßes optimiert werden.

Aufgabe der vorliegenden Erfindung ist es, eine Laufbildkamera der eingangs genannten Gattung zu schaffen, bei der Geräusch- und Schwingungsisolation zwischen der Innen- und der Außenkamera bzw. dem Kameragehäuse weiter verbessert ist und ein konstantes Auflagemaß zwischen der Objektivebene und der Bildebene ohne erforderliche Nachjustierungen oder den Einsatz lagekompensierender Zusatzeinrichtungen gewährleistet ist.

Diese Aufgabe wird erfindungsgemäß durch das kennzeichnende Merkmal des Anspruchs 1 gelöst.

Die erfindungsgemäße Lösung führt zu einer weiteren Verbesserung der Geräusch- und Schwingungsisolation zwischen der die geräuscherzeugenden Teile der Laufbildkamera tragenden Innenkamera und dem Kameragehäuse bei gleichzeitig höchstmöglicher Konstanz des Auflagemaßes zwischen der Objektivebene und der Bildebene der Laufbildkamera. Dabei sind Nachjustierungen oder der Einsatz lagekompensierender Zusatzeinrichtungen nicht erforderlich, so daß eine einfache Bedienung der Laufbildkamera bei hoher Bildqualität gewährleistet ist.

Die erfindungsgemäße Lösung geht von der Erkenntnis aus, daß sich die verschiedenen, auf das Kameraskelett einwirkenden Kräfte mit unterschiedlicher Frequenz ändern. So ändert sich die vom Kameramechanismus im Betrieb herrührende und auf das Kameraskelett einwirkende Kraft periodisch mit der Betriebs- bzw. Bildfrequenz und deren Vielfachem, während die von einer gesamten Bewegung der Filmkamera herrührende Trägheitskraft sowie die durch eine Lageänderung der gesamten Filmkamera sich ändernde Schwerkraft mit wesentlich geringeren Frequenzen auf das Skelett einwirken. Die frequenzabhängige, in Richtung der optischen Achse wirkende Steifigkeit der Verbindungselemente zwischen der Innenkamera und dem Kameragehäuse ermöglicht eine Selektion der verschiedenen, auf das Skelett einwirkenden Kräfte und muß insbesondere gegenüber der höherfrequenten, vom Kameramechanismus herrührenden Kraft wie eine sehr weiche Feder, gegenüber den niederfrequenten Trägheits- und Schwerkraftkomponenten jedoch wie eine sehr steife Feder wirken.

Die hochfrequente Krafterregung am Skelett stützt sich somit hauptsächlich gegen die Trägheit des Skeletts ab und es wird nur eine vernachlässigbar kleine Kraftkomponente an das Gehäuse weitergeleitet. Die Schwingungsamplituden des Skeletts sind aufgrund der relativ hohen Frequenz der Erregung und der Masse des Skeletts so klein, daß die Qualität der Bildaufzeichnung der Kamera nicht beeinträchtigt wird. Die niederfrequente Krafterregung am Skelett hingegen stützt sich hauptsächlich am Gehäuse ab. Die Schwinungsamplituden des Skeletts sind aufgrund der hohen wirksamken Steifigkeit der Verbindungselemente gegenüber diesen Frequenzen auch so klein, daß die optischen Qualität der Kamera nicht beeinträchtigt wird. Andererseits sind die Frequenzen so niedrig, daß sie am Gehäuse kein wahrnehmbares Geräusch verursachen.

Eine vorteilhafte Weiterbildung der erfindungsgemäßen Lösung ist dadurch gekennzeichnet, daß das geräuschisolierende Verbindungselemente als aktives Verbindungselement mit veränderbarer wirksamer Steifigkeit ausgebildet sind.

Die Verwendung aktiver Verbindungselemente ermöglicht die Regelung der wirksamen Steifigkeit unter Berücksichtigung von dynamisch einwirkenden Kräften.

Alternativ hierzu kann das Verbindungselement mit frequenzabhängiger Steifigkeit auch als passives Verbindungselement ausgebildet sein, dessen Material so beschaffen ist, daß es gegenüber dem höherfrequenten Kräften als sehr weiche Feder, gegenüber den niederfrequenten Kräften aber als sehr steife Feder wirkt.

Vorzugsweise besitzt das aktive Verbindungselement eine ausreichend hohe Eigensteifigkeit und eine dynamisch ansteuerbare Längenausdehnung.

Die hohe Eigensteifigkeit des aktiven geräuschisolierenden Verbindungselementes gewährleistet eine vernachlässigbar kleine Relativbewegung zwischen der Innenkamera und dem Kamera-Außengehäuse unter Einwirkung der Trägheitskraft, die bewegungsabhängig auf den Schwerpunkt der Innenkamera einwirkt, sowie der durch Lageänderungen der Laufbildkamera verursachten Schwerkraftkomponente in Richtung der optischen Achse der Laufbildkamera. Die dynamische Ansteuerung der Längenausdehnung des aktiven geräuschisolierenden Verbindungselementes gestattet es, daß die Innenkamera im dynamischen Gleichgewicht zwischen der Trägheitsmasse und der sich periodisch mit der Betriebsfrequenz bzw. Bildfrequenz und deren Vielfachem ändernden, auf die Innenkamera einwirkenden Kraft zu schwingen, ohne daß sich diese periodische Kraft am Kameragehäuse abstützt, so daß keine geräuscherregenden Schwingungen am Kameragehäuse auftreten.

Vorzugsweise ist die Länge des aktiven Verbindungselementes mit frequenzabhängiger Steifigkeit so veränderbar, daß sie einer Relativbewegung zwischen der Innenkamera und dem Kameragehäuse bei unendlich weicher Verbindung zwischen der Innenkamera und dem Kameragehäuse unter Einwirken einer sich periodisch mit der Bildfrequenz der Laufbildkamera oder einem geradzahligen Vielfachen davon ändernden Kraft entspricht.

Diese Art der Ansteuerung erlaubt es der Innenkamera, im dynamischen Gleichgewicht zwischen der eigenen Trägheit und der durch den Kameramechanismus hervorgerufenen und sich periodisch mit der Betriebs- oder Bildfrequenz und deren Vielfachem ändernden Kraft zu schwingen, ohne daß sich diese höherfrequente Kraft am Kameragehäuse abstützt. Damit verursacht die durch den Kameramechanismus verursachte, höherfrequente Kraft keine geräuscherregenden Schwingungen am Kameragehäuse und die auf die Innenkamera einwirkenden Kräfte können auch nur vernachlässigbare kleine Veränderungen des Auflagemaßes verursachen.

Eine bevorzugte Ausführungsform des aktiven geräuschisolierenden Verbindungselements besteht aus einem Federelement mit vorgegebener Federkonstanten und einem parallel zum Federelement angeordneten Wandlerelement, das eine gegenüber dem Federelement geringe Eigensteifigkeit aufweist, wobei das Wandlerelement so ansteuerbar ist, daß die Gesamtlänge des aktiven geräuschisolierenden Verbindungselementes veränderbar ist.

Vorzugsweise ist die Steifigkeit bzw. Federkonstante des Federelementes genügend groß, um beim Einwirken der Trägheitskraft bzw. der Schwerkraftkomponente nur sehr kleine Längenveränderungen des Federelementes zu verursachen, so daß das Auflagemaß bei Einwirken dieser Kräfte nicht verändert wird und damit zu keiner Beeinträchtigung der Abbildungsleistung der Laufbildkamera führt.

Das gegenüber dem Federelement eine nur sehr geringe Eigensteifigkeit aufweisende Wandlerelement kann so angesteuert werden, daß eine zusätzliche Kraftkomponente aufgebracht wird, die zur Längenänderung des Federelementes und damit der Gesamtlänge des aktiven geräuschisolierenden Verbindungselementes führt.

In einer alternativen Ausführungsform besteht das aktive geräuschisolierende Element aus einem elektromagnetischen, elektrostriktiven, magnetostriktiven oder piezoelektrischen Wandlerelement mit genügend großer Eigensteifigkeit, dessen Länge und damit die Länge des gesamten aktiven geräuschisolierenden Verbindungselementes durch geeignete Ansteuerung verändert werden kann.

Die Ansteuerung des parallel zu einem Federelement angeordneten Wandlerelementes mit sehr geringer Eigensteifigkeit oder zur Ansteuerung eines elektromagnetischen, elektrostriktiven, magnetostriktiven oder piezoelektrischen Wandlerelements mit hinreichend großer Eigensteifigkeit als aktivem geräuschisolierenden Verbindungselement erfolgt vorzugsweise durch eine Ansteuerschaltung, die mit mindestens einem Sensorelement verbunden ist, und einen Filter, der aus dem oder den Sensorsignalen nur die höherfrequenten Anteile weiterleitet, sowie eine Auswertschaltung enthält, die ein Ansteuersignal des Wandlerelements des aktiven geräuschisolierenden Verbindungselements erzeugt.

Vorzugsweise besteht das Sensorelement aus einem Kraftsensor mit hoher Eigensteifigkeit, der die Schnittkraft zwischen der Innenkamera und dem aktiven geräuschisolierenden Verbindungselement und/oder zwischen dem aktiven geräuschisolierenden Verbindungselement und dem Kameragehäuse und/oder zwischen dem Kameragehäuse und einer Referenzmasse erfaßt.

Alternativ oder zusätzlich kann das Sensorelement aus einem Längenmeßsensor, der den Abstand zwischen der Innenkamera und dem Kameragehäuse bzw. die Länge des aktiven geräuschisolierenden Verbindungselements erfaßt, bestehen.

Weiterhin kann das Wandlerelement über eine geeignete Multiplex-Schaltung zusätzlich zur Messung der Kraftänderung oder Längenausdehnung in der Funktion als Sensorelement verwendet werden.

Da das Schwingungssystem anhand der Massen der Innenkamera und des Kameragehäuses sowie der Eigensteifigkeit des aktiven geräuschisolierenden Elementes numerisch nachgebildet werden kann, besteht die Möglichkeit, den Verlauf der auf die sich periodisch mit der Betriebsfrequenz ändernden, auf den Kameramechanismus zurückzuführenden Kraft und der sich daraus ergebenden Erregung aus dem gefilterten Eingangssignal zu berechnen. Daraus läßt sich das Schwingungsverhalten des gesamten Systems für den Fall extrapolieren, daß das aktive geräuschisolierende Verbindungselement eine unendlich kleine Steifigkeit aufweist, woraus sich wiederum die benötigte Ansteuerung des Wandlerelements des aktiven geräuschisolierenden Verbindungselements ergibt.

Für eine geschlossene Regelschleife kann nach einer weiteren Ausgestaltung der erfindungsgemäßen Lösung nach Einstellung der Ansteuerung des aktiven geräuschisolierenden Verbindungselementes die Schnittkraft bzw. Längenänderung zwischen Kameragehäuse und aktivem geräuschisolierenden Verbindungselement bzw. zwischen aktivem geräuschisolierenden Verbindungselement und Innenkamera weitergemessen werden, so daß die Regelabweichung bzw. Güte der Einstellung nach Einwirken der Stellkraft überprüft werden kann. Durch mehrfaches Wiederholen der Berechnung kann die Ansteuerung des aktiven geräuschisolierenden Verbindungselementes dadurch optimiert werden, wobei in Weiterbildung der erfindungsgemäßen Lösung der Modellparameter jeweils über einen geeigneten Algorithmus variiert werden kann.

In einer weiteren bevorzugten Ausführungsform der Ansteuerung des aktiven geräuschisolierenden Verbindungselementes wird die Schwingungsbewegung der Innenkamera bei unendlich weicher Aufhängung und Erregung mit der auf dem Kameramechanismus zurückzuführenden, sich mit der Betriebsfrequenz ändernden Kraft durch den Sensor erfaßt und im Prozessor abgelegt. Dabei kann die Ermittlung der Bewegung getrennt von der Kamera erfolgen, indem die komplette Innenkamera sehr weich aufgehängt wird und ihre Bewegungen im Betrieb gemessen und abgespeichert werden.

Alternativ hierzu kann die Laufbildkamera so gestaltet werden, daß es möglich ist, für die Dauer der Messung das aktive geräuschisolierende Verbindungselement durch eine sehr weiche Feder zu ersetzen.

Aus der so ermittelten Bewegung der Innenkamera wird die Ansteuerung des aktiven geräuschisolierenden Verbindungselementes durch den Prozessor erzeugt. Weiterhin ist auch bei dieser Ausführungsform eine weitere Optimierung der Ansteuerung des aktiven geräuschisolierenden Verbindungselementes im Betrieb durch eine adaptive Steuerung oder Regelung möglich.

In einer vorteilhaften Ausgestaltung der erfindungsgemäßen Lösung ist die Innenkamera mit dem Kameragehäuse über drei aktive geräuschisolierende Verbindungselemente verbunden, deren längenveränderliche Achsen parallel zur optischen Achse der Laufbildkamera verlaufen und in jeweils gleichem Abstand zum Schwerpunkt der Innenkamera angeordnet sind.

Durch diese Anordnung der aktiven geräuschisolierenden Verbindungselemente wird eine Ausrichtung des Objektivs auf die Bildebene in der optischen Achse gewährleistet und verhindert, daß die Innenkamera in Bezug auf die optische Achse verkippt wird.

Aufgrund der Festlegung der Innenkamera in Bezug auf das Kameragehäuse zur Einhaltung eines konstanten Auflagemaßes aufgrund der unterschiedlichen, auf die Laufbildkamera einwirkenden Kräfte, können zur Stabilisierung der Innenkamera im Kameragehäuse und zur weiteren Geräuschisolation weitere elastische Elemente zwischen der Innenkamera und dem Kameragehäuse vorgesehen werden, deren Steifigkeit jedoch um ein Vielfaches geringer ist als die Eigensteifigkeit der aktiven geräuschisolierenden Verbindungselemente. Die Anordnung dieser weiteren elastischen Verbindungselemente ist so auszulegen, daß die Lage der Innenkamera zum Kameragehäuse in allen Freiheitsgraden zumindest statisch bestimmt ist.

In einer bevorzugten Ausführungsform der erfindungsgemäßen Lösung ist das Kameragehäuse in ein Hauptgehäuse und eine Trägerplatte, auf der die Objektivbefestigung angebracht ist, unterteilt, und das Hauptgehäuse und die Trägerplatte über weiche elastische Verbindungselemente miteinander verbunden, wobei die Innenkamera mit der Trägerplatte über mindestens ein aktives geräuschisolierendes Verbindungselement in Richtung der optischen Achse und das Hauptgehäuse mit der Innenkamera über mehrere weiche elastische Verbindungselemente verbunden sind.

In dieser bevorzugten Anordnung werden die aktiven geräuschisolierenden Verbindungselemente so angesteuert, daß sich die in Richtung der optischen Achse wirksame Komponente F₁ₓ der höherfrequenten Kraft F₁ nicht an der Trägerplatte abstützt.

In dieser Anordnung gewährleistet die hohe Eigensteifigkeit der aktiven geräuschisolierenden Verbindungselemente gleichzeitig, daß Komponenten der Trägheits- und Schwerkraft, die in Richtung der optischen Achse der Laufbildkamera wirken, nur eine vernachlässigbar kleine Relativbewegung zwischen der Innenkamera und dem Objektivträger verursachen, so daß die Konstanz des Auflagemaßes erhalten bleibt.

Anhand eines in der Zeichnung dargestellten Ausführungsbeispieles soll der der Erfindung zugrundeliegende Gedanke näher erläutert werden. Es zeigen:
- Figur 1: einen schematischen Längsschnitt durch eine Laufbildkamera mit Innenkamera und Kameragehäuse und einem zwischen Innenkamera und Kameragehäuse angeordneten Verbindungselement;
- Figur 2: eine schematische Darstellung eines aktiven geräuschisolierenden Verbindungselementes mit zueinander parallelgeschaltetem Feder- und Wandlerelement;
- Figur 3: eine schematische Darstellung der mit einem aktiven geräuschisolierenden Verbindungselement verbundenen Ansteuerschaltung;
- Figur 4: einen schematischen Längsschnitt durch eine Laufbildkamera mit zwischen Innenkamera und Kameragehäuse angeordneten aktiven geräuschisolierenden Verbindungselemente sowie weiteren elastischen Verbindungselementen;
- Figur 5: einen Querschnitt durch eine Laufbildkamera entlang der Linie A-A gemäß Figur 4 und
- Figur 6: einen schematischen Längsschnitt durch eine Laufbildkamera mit unterteiltem Kameragehäuse.

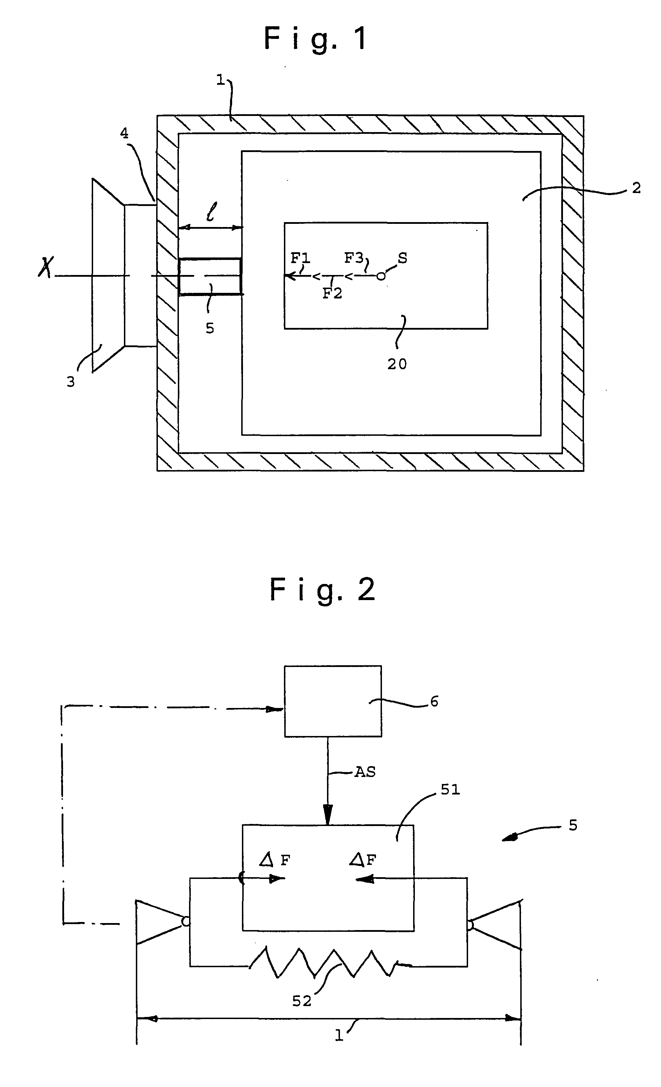

Figur 1 zeigt einen schematischen Längsschnitt durch eine Laufbildkamera mit einem Kameragehäuse 1, das über eine Objektivbefestigung 4 mit einem Kameraobjektiv 3 verbunden ist und durch eine Innenkamera 2, die nicht näher dargestellte Motor- und Getriebeeinrichtungen eines Kameramechanismus 20 zum Transport eines Laufbildfilmes entlang eines Bildfensters aufweist, das in der optischen Achse X der Laufbildkamera angeordnet ist. Zwischen der Innenkamera 2 und dem Kameragehäuse 1 ist ein Verbindungselement 5 angeordnet, das die beiden Hauptbaugruppen der Laufbildkamera mechanisch miteinander verbinden.

Wie vorstehend erläutert wurde, würde ein starres Verbindungselement 5 zwar einen konstanten Abstand 1 zwischen der Innenkamera 2 und dem Kameragehäuse 1 und damit einen konstanten Abstand zwischen der Objektivbefestigung 4 und dem Bildfenster, an dem der Laufbildfilm durch den Kameramechanismus 20 vorbeibewegt wird bewirken, jedoch würden sämtliche vom Kameramechanismus erzeugten Geräusche und Schwingungen auf das Kameragehäuse 1 übertragen werden, so daß der Betrieb der Laufbildkamera mit einer hohen Geräuscherzeugung verbunden ist.

Ein sehr weiches Verbindungselement 5 zwischen Kameragehäuse 1 und Innenkamera 2 würde zwar die Übertragung der vom Kameramechanismus 20 erzeugten Geräusche und Schwingungen auf das Gehäuse minimieren, würde aber zu einer erheblichen Veränderung des Auflagemaßes 1 zwischen Objektivbefestigung 4 und dem Bildfenster der Innenkamera 2 führen, so daß sich unscharfe Filmaufnahmen ergeben würden.

Im Folgenden werden zum Zwecke der Erläuterung das Kameragehäuse 1 und die Innenkamera 2 als starre Massen angenommen. Weiterhin soll zunächst der eindimensionale Fall betrachtet werden, bei dem die auf die Innenkamera 2 einwirkenden Kräfte und daraus resultierenden Bewegungen der Innenkamera 2 -in Bezug auf das Kameragehäuse 1 nur in Richtung der optischen Achse X auftreten.

Im Betrieb der Laufbildkamera wird die Innenkamera 2 mit mechanischen Schwingungen beaufschlagt, die vom Kameramechanismus 20 herrühren, und aus denen eine variable Kraft F₁ resultiert, die auf den Schwerpunkt S der Innenkamera 2 einwirkt. Wird die gesamte Laufbildkamera bewegt, so tritt als zusätzliche Kraft die Trägheitskraft F₂ in Abhängigkeit von der Bewegung der Laufbildkamera auf den Schwerpunkt der Innenkamera 2 auf. Durch eine Lageänderung der gesamten Laufbildkamera kann sich ferner die Schwerkraftkomponente F₃, die ebenfalls auf den Schwerpunkt S der Innenkamera einwirkt, in Richtung der optischen Achse X verändern.

Diese verschiedenen, auf den Schwerpunkt S der Innenkamera 2 einwirkenden Kräfte F₁, F₂ und F₃ ändern sich mit unterschiedlicher Frequenz. Während sich die Kraft F₁, die aufgrund des Kameramechanismus 20 auf den Schwerpunkt S der Innenkamera 2 einwirkt, periodisch mit der Betriebs- oder Bildfrequenz der Laufbildkamera und deren Vielfachem ändert, ändern sich die Kräfte F₂ und F₃ mit wesentlich geringeren Frequenzen.

Wäre das zwischen der Innenkamera 2 und dem Kameragehäuse 1 angeordnete Verbindungselement 5 unendlich weich, so würde sich die sich periodisch mit der Betriebs- bzw. Bildfrequenz und deren Vielfachem ändernde Kraft F₁ ausschließlich an der trägen Masse der Innenkamera 2 abstützen. Die Innenkamera 2 würde sich zwar relativ zum Kameragehäuse 1 bewegen, jedoch würde die Kraft F₁ nicht auf das Kameragehäuse übertragen werden. Somit würden die vom Kameramechanismus 20 herrührenden Schwingungen der Innenkamera 2 kein Geräusch am Kameragehäuse 1 erzeugen. Bei den üblichen Größenordnungen von Betriebskräften und Massen in Laufbildkameras wäre auch die aus der sich periodisch mit der Betriebsoder Bildfrequenz und deren Vielfachem ändernden Kraft F₁ resultierende Relativbewegung, also die Änderung des Auflagemaßes 1 zwischen der Objektivbefestigung 4 und dem Bildfenster der Innenkamera 2 vernachlässigbar klein.

Bei einer als gering angenommenen Steifigkeit des geräuschisolierenden Verbindungselementes 5 zwischen dem Kameragehäuse 1 und der Innenkamera 2 würden jedoch die durch die Trägheitskraft F₂ und durch die Schwerkraftkomponente F₃ in Richtung der optischen Achse wirkenden Kräfte in ihren üblichen Größenordnungen weitaus größere Relativbewegungen zwischen der Innenkamera 2 und dem Kameragehäuse 1 verursachen und somit das Auflagemaß 1 zwischen der Objektivbefestigung 4 und dem Bildfenster der Innenkamera 2 in nicht mehr aktzeptabler Weise verändern. Um dies zu verhindern, muß das geräuschisolierende Verbindungselement 5 zwischen Kameragehäuse 1 und Innenkamera 2 so steif sein, daß die Relativbewegungen zwischen Innenkamera 2 und Kameragehäuse 1 vernachlässigbar werden.

Das zwischen Kameragehäuse 1 und Innenkamera 2 angeordnete geräuschisolierende Verbindungselement 5 wird deshalb so gestaltet, daß es gegenüber der höherfrequenten, auf den Kameramechanismus 20 zurückzuführenden Kraft, die periodisch mit der Betriebs- oder Bildfrequenz oder einem Vielfachem dieser Frequenz auftritt, wie eine sehr weiche Feder wirkt, während es gegenüber den niederfrequenten Trägheits- und Schwerkräften wie eine sehr steife Feder wirkt. Demzufolge besitzt das Verbindungselement 5 eine ausreichend hohe Eigensteifigkeit, so daß die Trägheits- und Schwerkräfte F₂ und F₃ nur eine vernachlässigbar kleine Relativbewegung zwischen der Innenkamera 2 und dem Kameragehäuse 1 verursachen. Gleichzeitig sind die Frequenzen dieser Krafterregungen so niedrig, daß sie kein wahrnehmbares Geräusch erzeugen.

Zusätzlich ist die Längenausdehnung l des geräuschisolierenden Verbindungselementes 5 dynamisch ansteuerbar. Die Ansteuerung ist dabei so ausgelegt, daß die Länge l des aktiven geräuschisolierenden Verbindungselementes 5 verändert wird entsprechend der Relativbewegung zwischen der Innenkamera 2 und dem Kameragehäuse 1 wie bei einer unendlich weichen Verbindung und bei Erregung mit der vom Kameramechanismus 20 herrührenden, sich periodisch mit der Betriebsoder Bildfrequenz ändernden Kraft F₁ stattfinden würde. Aufgrund dieser Ansteuerung kann die Innenkamera 2 im dynamischen Gleichgewicht zwischen der Trägheitsmasse und der erregenden Kraft F₁ schwingen, ohne daß sich die Kraft F₁ am Kameragehäuse 1 abstützt. Damit verursacht die periodisch mit der Betriebs- oder Bildfrequenz und deren Vielfachem auftretende Kraft F₁ keine geräuscherregenden Schwingungen am Kameragehäuse 1 und allenfalls vernachlässigbar kleine Veränderungen des Auflagemaßes zwischen der Objektivbefestigung 4 am Kameragehäuse 1 und dem Bildfenster der Innenkamera 2.

In Figur 2 ist eine Ausführungsform eines dynamisch ansteuerbaren geräuschisolierenden Verbindungselementes 5 dargestellt, das nachfolgend als aktives geräuschisolierenden Verbindungselement 5 bezeichnet wird. Bei dieser Anordnung wird ein elektromagnetischer, elektrostriktiver, magnetostriktiver, piezoelektrischer oder in sonstiger Weise durch Einwirkung eines Ansteuersignals in seinen Abmessungen veränderbares Wandlerelement 51 parallel zu einem Federelement 52 mit vorgegebener Steifigkeit bzw. Federkonstante C geschaltet. Die Federkonstante C ist hinreichend groß, so daß die Trägheitskraft F₂ und die Schwerkraft F₃ nur sehr kleine Längenveränderungen verursachen, die zu keiner Beeinträchtigung des Auflagemaßes und damit der Abbildungsleistung der Laufbildkamera führen.

Das Wandlerelement 51 weist gegenüber dem Federelement 52 eine nur sehr geringe Eigensteifigkeit auf. Durch geeignete Ansteuerung des Wandlerelementes 51 mit einem Ansteuersignal AS, das von einer Ansteuerschaltung 6 abgegeben wird, wird eine zusätzliche Kraftkomponente δF aufgebracht, die dazu führt, daß die Länge des Federelementes 52 verändert wird, so daß auch die Gesamtlänge l des aktiven geräuschisolierenden Verbindungselementes 5 verändert wird.

Eine andere Variante des aktiven geräuschisolierenden Verbindungselementes 5 besteht aus einem elektromagnetischen, elektrostriktiven, magnetostriktiven oder piezoelektrischen Wandler mit genügend hoher Eigensteifigkeit bzw. Federkonstante C. Durch dynamische Ansteuerung des Wandlerelementes entsprechend der Ansteuerung des Wandlerelementes 51 in der Ausführungsform gemäß Figur 2 wird die Länge des Wandlerelementes und damit die Gesamtlänge des aktiven geräuschisolierenden Verbindungselementes 5 verändert, ohne daß ein zusätzliches parallel zum Wandlerelement geschaltetes Federelement erforderlich ist.

Neben den dargestellten und erwähnten Ausführungsformen des aktiven geräuschisolierenden Verbindungselementes sind auch andere Varianten möglich, wie beispielsweise hydrodynamische Verbindungselemente, die bei genügend hoher Eigensteifigkeit der höherfrequenten, variablen Kraft F₁ folgende Längenänderungen auf ein entsprechendes Ansteuersignal hindurchführen.

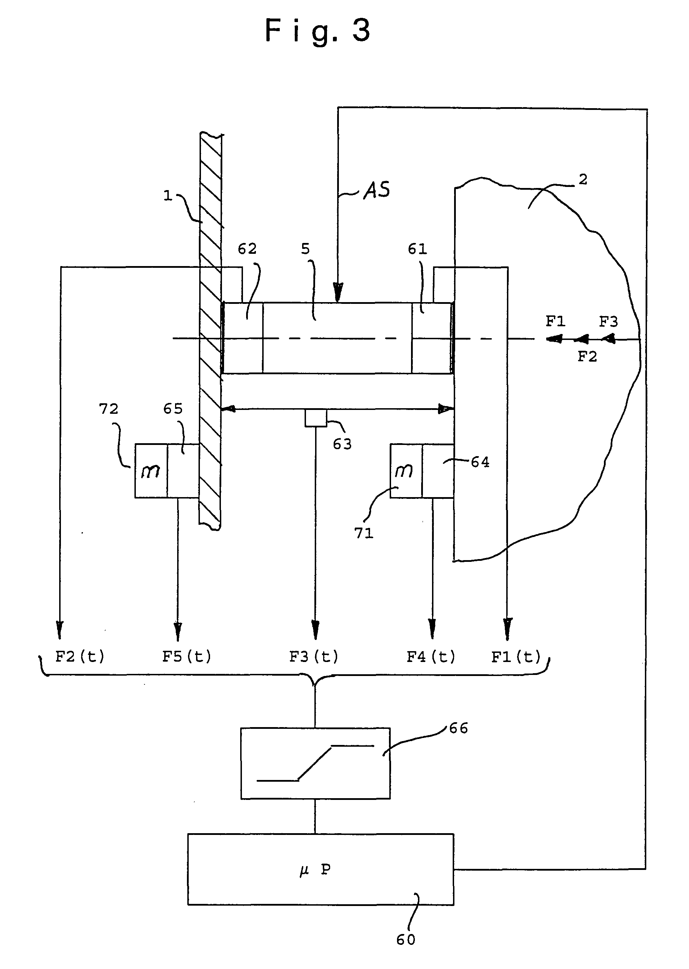

In Figur 3 ist ein Ausführungsbeispiel der Ansteuerschaltung für das aktive geräuschisolierenden Verbindungselement dargestellt.

Die Ansteuerschaltung 6 besteht im wesentlichen aus einem oder mehreren Kraft- oder Längenmeßsensoren 61 bis 65, einem dem oder den Sensorsignal(en) nachgeschalteten Filterelement 66 und einem Prozessor 60, der über ein Verstärkerelement das Ansteuersignal AS gemäß Figur 2 an das aktive geräuschisolierenden Verbindungselement 5 abgibt. Das Sensorelement kann aus einem Kraftsensor 61 bzw. 62 bestehen, der eine hinreichend hohe Eigensteifigkeit aufweist und die Schnittkraft zwischen der Innenkamera 2 und dem aktiven geräuschisolierenden Verbindungselement 5 (Kraftsensor 61) und/oder zwischen dem aktiven geräuschisolierenden Verbindungselement 5 und dem Kameragehäuse 1 (Kraftsensor 62) erfasst. Die von diesen Sensorelementen 61, 62 abgegebenen Signale werden als zeitabhängige Sensorsignale S₁(t) bzw. S₂(t) an das Filterelement 66 abgegeben.

Alternativ hierzu kann die Innenkamera 2 über einen Kraftsensor 64 mit einer Referenzmasse 71 gekoppelt werden, wobei der Kraftsensor 64 die Schnittkraft zwischen der Innenkamera 2 und der Referenzmasse 71 erfasst und als zeitabhängiges Sensorsignal S₄(t) abgibt. In gleicher Weise kann mittels eines Kraftsensors 65 die Schnittkraft zwischen dem Kameragehäuse 1 und einer Referenzmasse 72 gemessen werden und als zeitabhängiges Sensorsignal S₅(t) über das Filterelement 66 an den Prozessor 60 weitergeleitet werden.

Als weitere Alternative kann der Abstand zwischen der Innenkamera 2 und dem Kameragehäuse 1, d.h. die Länge des aktiven geräuschisolierenden Verbindungselementes 5 mittels eines Längenmeßsensors 63 erfasst werden, der ein längenproportionales Sensorsignal S₃(t) über das Filterelement 66 an den Prozessor 60 abgibt.

Weiterhin kann das Wandlerelement des aktiven geräuschisolierenden Verbindungselementes selbt über eine geeignete Multiplexschaltung zusätzlich zur Messung der Kraft- bzw. Längenausdehnung verwendet werden.

Eines oder eine Kombination mehrerer der vorstehend beschriebenen Sensorsignale dient als Eingangssignal für die Erzeugung des Ansteuersignals AS, wobei das Sensorsignal Sₙ(t) zunächst derart gefiltert wird, daß nur noch höhere Frequenzen in dem Signal enthalten sind. Das vom Filterelement 66 an den Prozessor 60 abgegebene Signal enthält somit keine Anteile, die durch die Trägheitskraft F₂ bzw. die Schwerkraft F₃ verursacht werden.

Aus dem gefilterten Sensorsignal wird im Prozessor 60 der Verlauf der Kraft F₁ unter Berücksichtigung des gesamten Schwingungssystems durch numerische Nachbildung der Massen der Innenkamera 2, des Kameragehäuses 1 und der Eigensteifigkeit des aktiven geräuschisolierenden Verbindungselementes 5 nachgebildet und so die Erregerkraft F₁ aus dem gefilterten Sensorsignal errechnet. Aus dieser numerischen Nachbildung der Erregerkraft F₁ wird das Schwingungsverhalten des gesamten Systems für den Fall extrapoliert, daß das aktive geräuschisolierende Verbindungselement 5 eine unendlich kleine Steifigkeit hätte. Diese Extrapolation wiederum ergibt die benötigte Ansteuerung des Wandlerelements 52 des aktiven geräuschisolierenden Elements 5 im Falle der Ausführungsform gemäß Figur 2 bzw. eines entsprechenden längenveränderlichen Elements.

Nach Abgabe des Ansteuersignals AS an das aktive geräuschisolierende Verbindungselement 5 wird vorzugsweise die Schnittkraft zwischen dem Kameragehäuse 1 und dem aktiven geräuschisolierenden Verbindungselement 5 bzw. zwischen dem aktiven geräuschisolierenden Verbindungselement 5 und der Innenkamera 2 erfaßt und damit die Güte der Einstellung des aktiven geräuschisolierenden Verbindungselements 5 überprüft. Die Ableitung des Ansteuersignals AS für das aktive geräuschisolierende Verbindungselement 5 aus dem numerisch modellierten Wert der Erregerkraft F₁ kann durch mehrfache Wiederholung der Berechnung optimiert werden, wobei vorzugsweise die Modellparameter jeweils über einen geeigneten Algorithmus variiert werden und das so ermittelte Ansteuersignal AS in der Weise variiert wird, daß die von der variablen, höherfrequenten Kraft F₁ verursachten Schwingungen durch das aktive geräuschisolierende Verbindungselement 5 so weit kompensiert werden, daß keine Übertragung der Erregerkraft auf das Kameragehäuse 1 erfolgt.

Alternativ zu dieser rechnerischen Ermittlung des Ansteuersignals AS für das aktive geräuschisolierende Verbindungselement 5 aus dem oder den Sensorsignal(en) besteht die Möglichkeit, die durch den Kameramechanismus 20 hervorgerufenen Schwingungsbewegungen der Innenkamera 2 kameraspezifisch meßtechnisch zu erfassen und im Prozessor 60 gemäß Fig. 3 abzulegen. Diese meßtechnische Erfassung erfolgt bei sehr weicher Aufhängung der Innenkamera 2 und Erregung mit der höherfrequenten, vom Kameramechanismus 20 herrührenden Kraft F₁ und beispielsweise für die unterschiedlichen Kamerageschwindigkeiten, Filmarten und dgl. in einem Tabellenspeicher des Prozessors 60 abgelegt werden.

Die Ermittlung der Bewegung der Innenkamera 2 kann auch getrennt von der Laufbildkamera erfolgen, indem die komplette Innenkamera 2 sehr weich aufgehängt wird und ihre Bewegungen im Betriebszustand, d.h. bei laufendem Kamerawerk gemessen und abgespeichert werden.

Alternativ hierzu kann die Laufbildkamera so gestaltet werden, daß für die Dauer der Messung das aktive geräuschisolierende Verbindungselement 5 durch eine sehr weiche Feder ersetzt und unter unterschiedlichen Betriebsbedingungen der Laufbildkamera die Erregerkraft F₁ meßtechnisch erfaßt und in einem Tabellenspeicher des Prozessors 60 abgelegt wird. Aus dem so ermittelten Bewegungsablauf der Innenkamera 2 infolge der höherfrequenten Erregerkraft F₁ wird das Ansteuersignal AS des aktiven geräuschisolierenden Verbindungselements 5 durch den Prozessor 60 erzeugt. Auch in dieser Ausführungsform ist eine weitere Optimierung der Ansteuerung bzw. Abgabe des Ansteuersignals vom Prozessor 60 an das aktive geräuschisolierende Verbindungselement 5 im Betrieb der Laufbildkamera möglich und für eine adaptive Regelung zweckmäßig.

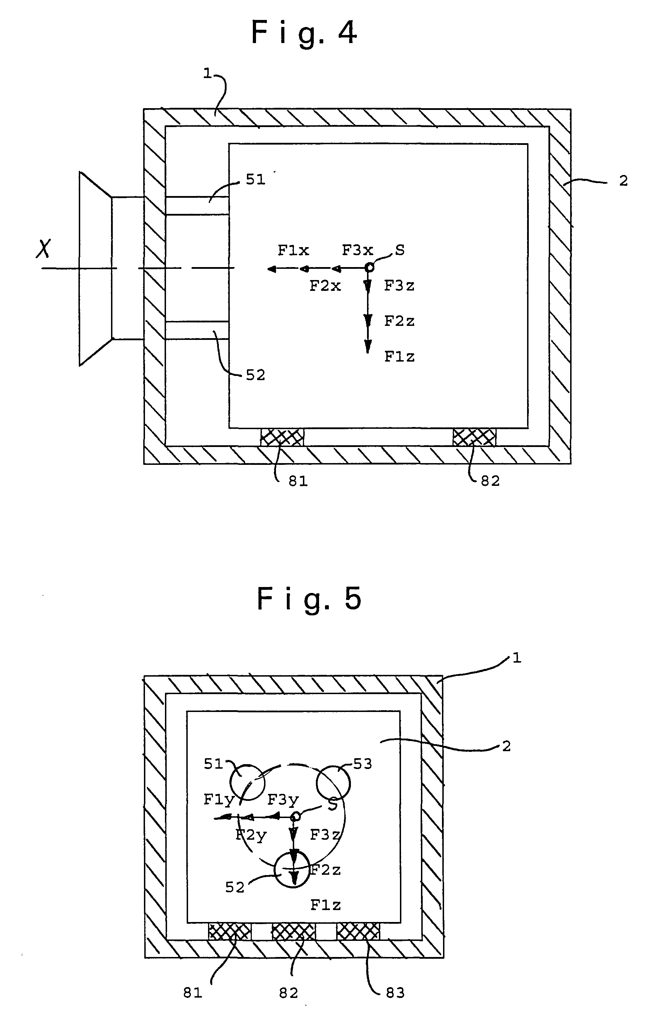

Das vorstehend anhand einer eindimensionalen Darstellung einer Laufbildkamera beschriebene Lösungsprinzip ist analog auch auf die mehrdimensionalen Anforderungen an eine Laufbildkamera anwendbar. In den Figuren 4 und 5 ist eine derartige dreidimensionale Anwendung des erfindungsgemäßen Lösungsprinzip in einem schematischen Längsschnitt einer Laufbildkamera (Fig. 4) sowie in einem schematischen Querschnitt der Laufbildkamera gemäß Fig. 4 entlang der Linie A-A dargestellt.

In dieser Ausführungsform ist die Innenkamera 1 mit dem Kameragehäuse 2 über drei aktive geräuschisolierende Verbindungselemente 51, 52, 53 verbunden, deren Wirkrichtungen, d.h. deren längenveränderliche Achsen parallel zur optischen Achse X der Laufbildkamera angeordnet sind. Dabei sind die Achsen der drei aktiven geräuschisolierenden Verbindungselemente 51, 52, 53 jeweils im gleichen Abstand zum Schwerpunkt S der Innenkamera 2 angeordnet, um ein Verkippen der Innenkamera 2 gegenüber dem Kameragehäuse 1 zu verhindern.

Weiterhin ist die Innenkamera 2 mit dem Kameragehäuse 1 über weitere elastische Elemente 81, 82, 83 verbunden, deren Steifigkeit um ein Vielfaches geringer ist als die Eigensteifigkeit der aktiven geräuschisolierenden Verbindungselemente 51, 52, 53. Die Anordnung der aktiven geräuschisolierenden Verbindungselemente 51, 52, 53 sowie der weiteren elastischen Verbindungselemente 81, 82, 83 ist so ausgelegt, daß die Lage der Innenkamera 2 in bezug auf das Kameragehäuse 1 in allen Freiheitsgraden der Bewegung der Innenkamera 2 in bezug auf das Kameragehäuse 1 zumindest statisch festgelegt ist.

Die weiteren elastischen Verbindungselemente 81, 82, 83 können beispielsweise eine Drei-Punkt-Lagerung des Bodens der Innenkamera 2 in bezug auf den Boden des Kameragehäuses 1 bilden, es können aber auch beliebig andere geometrische Konfigurationen der weiteren elastischen Verbindungselemente 81, 82, 83 gewählt werden. Dabei können die weiteren elastischen Verbindungselemente 81, 82, 83 sowohl Druckals auch Zugkräfte übertragen, so daß eine weitere Abstützung der Innenkamera 2 in bezug auf das Kameragehäuse 1 entbehrlich wird.

Alternativ oder ergänzend zu dieser Ausbildung der weiteren elastischen Verbindungselemente 81, 82, 83 ist die Anordnung weiterer weicher Verbindungselemente zwischen Innenkamera 2 und Kameragehäuse 1 an den Seiten zwischen den Seitenwänden, der Rückseite bzw. der Oberseite der Laufbildkamera möglich.

In den Figuren 4 und 5 sind die auf den Schwerpunkt S der Innenkamera 2 einwirkenden Kräfte F₁, F₂, F₃, d.h. die variable, höherfrequente, auf den Kameramechanismus zurückzuführende Kraft F₁, die Trägheitskraft F₂ und die Schwerkraft F₃ in ihre drei Kraftkomponenten Fₙₓ, F_{ny} und F_{nz} dargestellt, wobei das Koordinatensystem seinen Ursprung im Schwerpunkt S der Innenkamera 2 aufweist. Die Ansteuerung der aktiven geräuschisolierenden Verbindungselemente 51, 52, 53 erfolgt in der Weise, daß sich die Komponente der auf die Schwingungen des Kameramechanismus zurückzuführenden Kraft F₁, die in Richtung der optischen Achse X wirkt, nicht am Kameragehäuse 1 abstützt und somit kein Geräusch auf das Kameragehäuse 1 überträgt. Die in Richtung der optischen Achse wirkenden Komponenten der Trägheitskraft F₂ und der Schwerkraft F₃ verursachen aufgrund der hohen Eigensteifigkeit der aktiven geräuschisolierenden Verbindungselemente 51, 52, 53 eine vernachlässigbar kleine Relativbewegung der Innenkamera 2 in bezug auf das Kameragehäuse 1 und somit auch eine nur vernachlässigbar kleine Veränderung des Auflagemaßes zwischen der Objektivbefestigung und dem Bildfenster.

Die Komponenten der höherfrequenten Erregerkraft F₁, die nicht in Richtung der optischen Achse X wirken, stützen sich aufgrund der geringen Eigensteifigkeit der weiteren elastischen Verbindungselemente 81, 82, 83 nur in geringem Maße am Kameragehäuse 1 ab, so daß auch die auf diese Kräfte zurückzuführenden Geräusche nicht oder nur geringfügig auf das Kameragehäuse 1 übertragen werden. Die nicht in Richtung der optischen Achse X wirkenden Komponenten der Trägheitskraft F₂ und der Schwerkraft F₃ verursachen zwar eine Längenänderung der weiteren elastischen Elemente 81, 82, 83 und somit eine Relativbewegung der Innenkamera 2 in bezug auf das Kameragehäuse 1, diese Relativbewegungen haben allerdings keine Veränderungen des Auflagemaßes zwischen Objektivbefestigung und Bildfenster zur Folge.

Es liegt auch im Rahmen der erfindungsgemäßen Anordnung, weitere aktive geräuschisolierende Verbindungselemente zwischen der Innenkamera 2 und dem Kameragehäuse in Wirkrichtungen anzubringen, die nicht parallel zur optischen Achse X verlaufen. Damit kann die mechanische Stabilität bei gleichzeitiger Schwingungsisolation auch in den weiteren Achsen des dreidimensionalen Koordinatensystems gewährleistet werden.

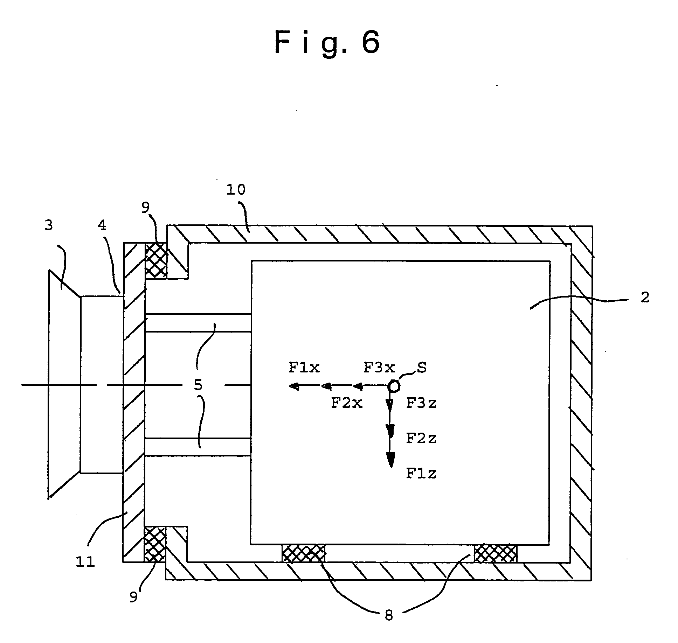

In Figur 6 ist eine bevorzugte Ausführungsform für eine geräuschisolierte Laufbildkamera dargestellt, bei der das Kameragehäuse 1 in ein Hauptgehäuse 10 und eine Trägerplatte 11 unterteilt ist, wobei die Objektivbefestigung 4 des Objektivs 3 an der Trägerplatte 11 angebracht ist. Das Hauptgehäuse 10 und die Trägerplatte 11 sind über ein oder umlaufendes oder mehrere relativ weiche elastische Verbindungselemente 9 miteinander verbunden.

Die Innenkamera 2 ist mit der Trägerplatte 11 über drei aktive geräuschisolierende Verbindungselemente 5 verbunden, deren Wirkrichtungen parallel zur optischen Achse X verlaufen. Die Innenkamera 2 ist mit dem Hauptgehäuse 10 über mehrere relativ weiche elastische Verbindungselemente 8 verbunden, so daß sich eine zumindest statisch bestimmte Zuordnung der Innenkamera 2 in bezug auf das Hauptgehäuse 10 bzw. Kameragehäuse 1 ergibt.

Die aktiven geräuschisolierenden Verbindungselemente 5 werden bei dieser Ausgestaltung einer geräuschisolierten Laufbildkamera so angesteuert, daß sich die in Richtung der optischen Achse wirksamen Komponenten der variablen Erregerkraft F₁ nicht an der Trägerplatte 11 abstützen und somit kein vom Kameramechanismus herrührendes Geräusch auf die Trägerplatte 11 übertragen.

Die hohe Eigensteifigkeit der aktiven geräuschisolierenden Verbindungselemente 5 gewährleistet gleichzeitig, daß Komponenten der Trägheitskraft F₂ und der Schwerkraft F₃, die in Richtung der optischen Achse X wirksam sind, nur eine vernachlässigbar kleine Relativbewegung zwischen der Innenkamera 2 und der Trägerplatte 11 verursachen, so daß das Auflagemaß zwischen der Objektivbefestigung 4 und dem in der Innenkamera 2 angeordneten Bildfenster in hohem Maße konstant bleibt.

## Patentansprüche

1. Laufbildkamera mit einer Innenkamera (2), die einen geräuscherzeugenden Kameramechanismus (20) trägt, einem Kameragehäuse (1), das einen Objektivträger (4) aufweist, an dem eine Aufnahmeoptik (3) in der optischen Achse (X) der Laufbildkamera angeordnet ist, und mehreren zwischen der Innenkamera und dem Kameragehäuse angeordneten geräuschisolierenden Verbindungselementen (5; 51, 52, 53; 8; 81, 82, 83),
**dadurch gekennzeichnet,**
**daß** zumindest eines der geräuschisolierenden Verbindungselemente (5; 51, 52, 53) eine in Richtung der optischen Achse wirkende frequenzabängige Steifigkeit aufweist, so daß es gegenüber niederfrequenten Kräften eine höhere und gegenüber höherfrequenten Kräften eine niedrigere Steifigkeit aufweist.

2. Laufbildkamera nach Anspruch 1, **dadurch gekennzeichnet, daß** das geräuschisolierende Verbindungselement (5, 51, 52, 53) als aktives Verbindungselement mit veränderbarer wirksamer Steifigkeit ausgebildet ist, das eine hohe Eigensteifigkeit aufweist und dessen Längenausdehnung dynamisch ansteuerbar ist.

3. Laufbildkamera nach einem der vorangehenden Ansprüche, **dadurch gekennzeichnet, daß** die Länge des aktiven Verbindungselementes mit frequenzabhängiger Steifigkeit (5, 51, 52, 53) so veränderbar ist, daß sie einer Relativbewegung zwischen der Innenkamera (2) und dem Kameragehäuse (1) bei unendlich weicher Verbindung zwischen der Innenkamera (2) und dem Kameragehäuse (1) unter Einwirken einer sich periodisch mit der Bildfrequenz der Laufbildkamera oder einem gradzahligen Vielfachen davon ändernden Kraft entspricht.

4. Laufbildkamera nach Anspruch 2 oder 3, **dadurch gekennzeichnet, daß** das aktive geräuschisolierende Verbindungselement (5, 51, 52, 53) aus einem Federelement (52) mit einer Federkonstante, die bei Einwirken der Trägheitskraft in Abhängigkeit von einer Bewegung der Laufbildkamera auf den Schwerpunkt der Innenkamera (2) und/oder auf eine Lageänderung der gesamten Laufbildkamera wirkenden Schwerkraftkomponente nur geringfügige Längenänderungen zuläßt, und einem parallel zum Federelement (52) angeordneten Wandlerelement (51) besteht, das eine gegenüber dem Federelement (52) geringe Eigensteifigkeit aufweist und so ansteuerbar ist, daß die Gesamtlänge des aktiven geräuschisolierenden Verbindungselementes (5, 51, 52, 53) veränderbar ist.

5. Laufbildkamera nach Anspruch 4, **dadurch gekennzeichnet, daß** das Wandlerelement (51) aus einem elektromagnetischen, elektrostriktiven, magnetostriktiven oder piezoelektrischen Wandler und das aktive geräuschisolierende Verbindungselement (5, 51, 52, 53) aus einem elektromagnetischen, elektrostriktiven, magnetostriktiven oder piezoelektrischen Wandlerelement mit genügend großer Eigensteifigkeit besteht, dessen Länge und damit die Länge des gesamten aktiven geräuschisolierenden Verbindungselementes (5, 51, 52, 53) durch geeignete Ansteuerung veränderbar ist, durch eine Ansteuerschaltung (6), die mindestens ein Sensorelement (61 bis 65), ein Filterelement (66), das aus dem oder den Sensorsignalen nur die höherfrequenten Anteile weitergibt, sowie eine Auswertschaltung (60) aufweist, die ein Ansteuersignal (AS) für das Wandlerelement (51) des aktiven geräuschisolierenden Verbindungselements (5, 51, 52, 53) erzeugt.

6. Laufbildkamera nach Anspruch 5, **dadurch gekennzeichnet, daß** das Sensorelement aus einem Kraftsensor (61, 62, 64, 65) mit hoher Eigensteifigkeit besteht, der die Schnittkraft zwischen der Innenkamera (2) und dem aktiven geräuschisolierenden Verbindungselement (5) und/oder zwischen dem aktiven geräuschisolierenden Verbindungselement (5) und dem Kameragehäuse (1) und/oder zwischen dem Kameragehäuse (1) und einer Referenzmasse (71 bzw. 72) und/oder zwischen der Innenkamera (2) und einer Referenzmasse (71) erfaßt.

7. Laufbildkamera nach Anspruch 5, **dadurch gekennzeichnet, daß** das Sensorelement aus einem Längenmeßsensor (63) besteht, der den Abstand (1) zwischen der Innenkamera (2) und dem Kameragehäuse (1) bzw. die Länge des aktiven geräuschisolierenden Verbindungselements (5) erfaßt.

8. Laufbildkamera nach einem der Ansprüche 4 bis 7, **dadurch gekennzeichnet, daß** das Wandlerelement (51) über eine Multiplexschaltung auch als Kraft- oder Längenmeßsensor dient.

9. Laufbildkamera nach Anspruch 5, **dadurch gekennzeichnet, daß** die Auswertschaltung (60) aus einem Prozessor besteht, der aus dem Ausgangssignal des Filterelements (66) den Verlauf, der sich periodisch mit der Betriebsbzw. Bildfrequenz und deren vielfachen ändernden, auf die Innenkamera (2) einwirkenden Kraft F₁ unter Berücksichtigung des Schwingungssystems, das sich aus den Massen der Innenkamera (2), dem Kameragehäuse (1) und der Eigensteifigkeit des aktiven geräuschisolierenden Elementes (5) zusammensetzt und daraus das Schwingungsverhalten des schwingfähigen Systems unter der Annahme extrapoliert, daß das aktive geräuschisolierende Element (5) eine unendlich kleine Steifigkeit besitzt.

10. Laufbildkamera nach dem Anspruch 9, **dadurch gekennzeichnet, daß** das vom Prozessor (60) abgebene Ansteuersignal. (AS) für das Wandlerelement (51) des aktiven geräuschisolierenden Verbindungselementes (5) durch Erfassung der Schwingungsbewegung der Innenkamera (2) durch die Sensorelemente bei sehr weicher Aufhängung und Erregung mit der sich periodisch mit der Betriebs- oder Bildfrequenz oder deren Vielfachem ändernden, auf die Innenkamera einwirkenden Kraft F₁ ermittelt und in einem Tabellenspeicher abgelegt wird.

11. Laufbildkamera nach einem der Ansprüche 9 und 10, **dadurch gekennzeichnet, daß** die Bewegung der Innenkamera (2) im Betriebszustand in der Weise erfaßt wird, daß für die Dauer der Erfassung das aktive geräuschisolierende Verbindungselement (5) durch eine sehr weiche Feder ersetzt und die Erregerkraft F₁ unter unterschiedlichen Betriebsbedingungen der Laufbildkamera erfaßt und in einem Tabellenspeicher des Prozessors 60 abgelegt wird.

12. Laufbildkamera nach einem der Ansprüche 9 bis 11, **dadurch gekennzeichnet, daß** die Bewegung der Innenkamera (2) getrennt von der Laufbildkamera in der Weise erfolgt, daß die Innenkamera (2) sehr weich aufgehängt wird und ihre Bewegungen im Betriebszustand gemessen und abgespeichert werden.

13. Laufbildkamera nach einem der Ansprüche 5 bis 12, **dadurch gekennzeichnet, daß** nach Abgabe des Ansteuersignals (AS) an das aktive geräuschisolierende Verbindungselement (5) die Schnittkraft zwischen dem Kameragehäuse (1) und dem aktiven geräuschisolierenden Verbindungselement (5) bzw. zwischen dem aktiven geräuschisolierenden Verbindungselement (5) und der Innenkamera (2) erfaßt und die Güte der Einstellung des aktiven geräuschisolierenden Verbindungselements (5) überprüft wird.

14. Laufbildkamera nach einem der Ansprüche 5 bis 13, **dadurch gekennzeichnet, daß** die Ableitung des Ansteuersignals (AS) für das aktive geräuschisolierende Verbindungselement (5) aus dem numerisch modellierten Wert der Erregerkraft F₁ durch mehrfache Wiederholung der Berechnung optimiert wird, insbesondere, daß die Modellparameter über einen Algorithmus variiert werden und das so ermittelte Ansteuersignal (AS) in der Weise variiert wird, daß die von der variablen, höherfrequenten Kraft F₁ verursachten Schwingungen durch das aktive geräuschisolierende Verbindungselement (5) so weit kompensiert werden, daß keine Übertragung der Erregerkraft auf das Kameragehäuse (1) erfolgt.

15. Laufbildkamera nach einem der Ansprüche 2 bis 14, **dadurch gekennzeichnet, daß** das aktive Verbindungselement aus drei aktiven geräuschisolierenden Verbindungselementen (51, 52, 53) besteht, deren längenveränderliche Achsen parallel zur optischen Achse (X) der Laufbildkamera verlaufen und in jeweils gleichem Abstand zum Schwerpunkt der Innenkamera (2) angeordnet sind.

16. Laufbildkamera nach Anspruch 15, **dadurch gekennzeichnet, daß** die Innenkamera (2) und das Kameragehäuse (1) über weitere elastische Elemente (81, 82, 83) miteinander verbunden sind, deren Steifigkeit um ein Vielfaches geringer ist als die Eigensteifigkeit der aktiven geräuschisolierenden Verbindungselemente (51, 52, 53), und daß die aktiven geräuschisolierenden Verbindungselemente (51, 52, 53) und die weiteren elastischen Verbindungselemente (81, 82, 83) so angeordnet sind, daß die Lage der Innenkamera (2) in Bezug auf das Kameragehäuse (1) in allen Freiheitsgraden zumindest statisch bestimmt ist, wobei vorzugsweise die weiteren elastischen geräuschisolierende Verbindungselemente (81, 82, 83) zwischen der Innenkamera (2) und dem Kameragehäuse (1) in der Wirkrichtung angeordnet werden, die nicht parallel zur optischen Achse (X) verläuft.

17. Laufbildkamera nach einem der vorangehenden Ansprüche, **dadurch gekennzeichnet, daß** das Kameragehäuse (1) in ein Hauptgehäuse (10) und eine Trägerplatte (11), auf der die Objektivbefestigung (4) angebracht ist, unterteilt ist, daß das Hauptgehäuse (10) und die Trägerplatte (11) über weiche elastische Verbindungselemente (9) miteinander verbunden sind, daß die Innenkamera (2) mit der Trägerplatte (11) über mindestens ein aktives geräuschisolierendes Verbindungselement (5) in Richtung der optischen Achse (X) und das Hauptgehäuse (10) mit der Innenkamera (2) über mehrere weiche elastische Verbindungselemente (8) verbunden sind.

## Claims

1. Motion-picture camera with an inner camera (2) which supports a sound-generating camera mechanism (20), a camera housing (1) which has a lens carrier (4) on which a recording optic (3) is mounted in the optical axis (x) of the motion-picture camera, and with several sound-insulating connecting elements (5, 51, 52, 53; 8, 81, 82, 83) disposed between the inner camera and the camera housing,
**characterised in that**
at least one of the sound-insulating connecting elements (5, 51, 52, 53) has a frequency-dependent rigidity which acts in the direction of the optical axis so that it has a higher rigidity in relation to lower frequency forces and a lower rigidity in relation to higher-frequency forces.

2. Motion-picture camera according to claim 1 **characterised in that** the sound-insulating connecting element (5, 51, 52, 53) is formed as an active connecting element with variable active rigidity which has a high inherent rigidity and whose longitudinal extension can be dynamically controlled.

3. Motion-picture camera according to one of the preceding claims **characterised in that** the length of the active connecting element with frequency-dependent rigidity (5, 51, 52, 53) is variable so that it corresponds to a relative movement between the inner camera (2) and the camera housing (1) in the event of an infinitely soft connection between the inner camera (2) and the camera housing (1) through the action of a force which changes periodically with the picture frequency of the motion-picture camera or a whole number multiple thereof.

4. Motion-picture camera according to claim 2 or 3 **characterised in that** the active sound-insulating connecting element (5, 51, 52, 53) consists of a spring element (52) having a spring constant, which with the action of the inertia force in dependence on movement of the motion-picture camera on the centre of gravity of the inner camera (2) and/or gravity components effecting a position change of the motion-picture camera permits only slight changes in length, and of a converter element (51) mounted parallel to the spring element (52) and having a slight inherent rigidity compared with the spring element (52) and thus controllable so that the overall length of the active sound-insulating connecting element (5, 51, 52, 53) is variable.

5. Motion-picture camera according to claim 4 **characterised in that** the converter element (51) consists of an electromagnetic, electrostrictive, magnetostrictive or piezoelectric converter and the active sound-insulating connection element (5, 51, 52, 53) consists of an electromagnetic, electrostrictive, magnetostrictive or piezoelectric converter element having sufficiently great inherent rigidity, whose length and thus the length of the overall active sound-insulating connecting element (5, 51,52, 53) can be changed through suitable control, through a control circuit (6) which has at least one sensor element (61 to 65), one filter element (66) which only forwards the higher-frequency parts from the or each sensor signal, as well as an evaluator circuit (60) which generates a control signal (AS) for the converter element (51) of the active sound-insulating connecting element (5, 51, 52, 53).

6. Motion-picture camera according to claim 5 **characterised in that** the sensor element consists of a force sensor (61, 62, 64, 65) with high inherent rigidity which detects the shear force between the inner camera (2) and the active sound-insulating connecting element (5) and/or between the active sound-insulating connecting element (5) and the camera housing (1) and/or between the camera housing (1) and a reference mass (71 or 72) and/or between the inner camera (2) and a reference mass (71).

7. Motion-picture camera according to claim 5 **characterised in that** the sensor element consists of a length measuring sensor (63) which detects the distance (1) between the inner camera (2) and the camera housing (1) or the length of the active sound-insulating connecting element (5).

8. Motion-picture camera according to one of claims 4 to 7 **characterised in that** the converter element (51) through a multiplex circuit also serves as a force or length measuring sensor.

9. Motion-picture camera according to claim 5 **characterised in that** the evaluation circuit (60) consists of a processor which extrapolates from the output signal of the filter element (66) the path of the force F1 which acts on the inner camera (2) and changes periodically with the operating or image frequency and its multiples taking into consideration the vibration system which is comprised of the masses of the inner camera (2),the camera housing (1) and the inherent rigidity of the active sound-insulating element (5) and from this the vibration behaviour of the vibration system with the assumption that the active sound-insulating element (5) has an infinitely small rigidity.

10. Motion-picture camera according to claim 9 **characterised in that** the control signal (AS) emitted by the processor (60) for the converter element (51) of the active sound-insulating connecting element (5) is determined by detecting the vibration movement of the inner camera (2) through the sensor elements with a very soft suspension and excitation with the force F₁ acting on the inner camera and changing periodically with the operating or image frequency or its multiple, and is recorded in a memory table.

11. Motion-picture camera according to one of claims 9 and 10 **characterised in that** the movement of the inner camera (2) is detected in the operating state **in that** for the duration of detection the active sound-insulating connecting element (5) is replaced by a very soft spring and the exciter force F₁ is detected under different operating conditions of the motion-picture camera and is recorded in a memory table of the processor (60).

12. Motion-picture camera according to one of claims 9 to 11 **characterised in that** the movement of the inner camera (2) is undertaken separately from the motion-picture camera **in that** the inner camera (2) is suspended very softly and its movements in the operating state are measured and stored.

13. Motion-picture camera according to one of claims 5 to 12 **characterised in that** after sending the control signal (As) to the active sound-insulating connecting element (5) the shear force between the camera housing (1) and the active sound-insulating connecting element (5) or between the active sound-insulating connecting element (5) and the inner camera (2) is detected and the quality of the adjustment of the active sound-insulating connecting element (5) is checked.

14. Motion-picture camera according to one of claims 5 to 13 **characterised in that** the derivation of the control signal (AS) for the active sound-insulating connecting element (5) from the numerically modelled value of the exciter force F₁ is optimised through repeating the calculation several times, more particularly **in that** the model parameters are varied through an algorithm and the control signal (AS) thus determined is varied **in that** the vibrations caused by the variable higher-frequency force F₁ are compensated by the active sound-insulating connecting element (5) until there is no transmission of exciter force to the camera housing (1).

15. Motion-picture camera according to one of claims 2 to 14 **characterised in that** the active connecting element consists of three active sound-insulating connecting elements (51, 52, 53) whose length-variable axes run parallel to the optical axis (X) of the motion-picture camera and are each disposed at the same distance from the centre of gravity of the inner camera (2).

16. Motion-picture camera according to claim 15 **characterised in that** the inner camera (2) and the camera housing (1) are connected together through further elastic elements (81, 82, 83) whose rigidity is less by a multiple than the inherent rigidity of the active sound-insulating connecting elements (51, 52, 53) and that the active sound-insulating connecting elements (81, 82, 83) are arranged so that the position of the inner camera (2) in relation to the camera housing (1) is determined at least statically in all degrees of freedom whereby preferably the further elastic sound-insulating connecting elements (81, 82, 83) are mounted between the inner camera (2) and the camera housing (1) in the active direction which does not run parallel to the optical axis (X).

17. Motion-picture camera according to one of the preceding claims **characterised in that** the camera housing (1) is divided into a main housing (10) and a support plate (11) on which the lens fixing (4) is attached, that the main housing (10) and the support plate (11) are connected together through soft elastic connecting elements (9), that the inner camera (2) is connected with the support plate (11) through at least one active sound-insulating connecting element (5) in the direction of the optical axis (X) and the main housing (10) is connected to the inner camera (2) through several soft elastic connecting elements (8).

## Revendications

1. Caméra cinématographique comportant une caméra intérieure (2), qui porte un mécanisme de caméra (20) produisant un bruit, un boîtier de caméra (20), qui comporte un porte-objectif (4), sur lequel un système optique d'enregistrement (3) est disposé sur l'axe optique (X) de la caméra cinématographique, et plusieurs éléments de liaison (5;51,52,53;8;81,82,83) réalisant une isolation du bruit et disposés entre la caméra intérieure et le boîtier de caméra,
**caractérisée en ce**
**qu'**au moins l'un des éléments de liaison (5;51,52,53) réalise une isolation du bruit et possède une rigidité qui dépend de la fréquence et agit dans la direction de l'axe optique de sorte qu'il possède une rigidité plus élevée vis-à-vis de forces à fréquence plus faible et une rigidité plus faible vis-à-vis de forces à fréquence accrue.

2. Caméra cinématographique selon la revendication 1, **caractérisée en ce que** l'élément de liaison (5,51, 52,53), qui réalise une isolation du bruit, est agencé sous la forme d'un élément de liaison actif à rigidité active variable, qui présente une rigidité propre élevée et dont la dilatation longitudinale est commandable de façon dynamique.

3. Caméra cinématographique selon l'une des revendications précédentes, **caractérisée en ce que** la longueur de l'élément de liaison actif (5, 51, 52) possédant une rigidité qui dépend de la fréquence peut être modifiée de telle sorte que cette longueur correspond à un déplacement relatif entre la caméra intérieure (2) et le boîtier de caméra (1) dans le cas d'une liaison infiniment souple entre la caméra intérieure (2) et le boîtier de caméra (1) en faisant agir une force qui varie périodiquement avec la fréquence d'images de la caméra cinématographique ou avec un multiple pair de cette fréquence.

4. Caméra cinématographique selon la revendication 2 ou 3, **caractérisée en ce que** l'élément de liaison actif (5,51,52,53) réalisant une isolation vis-à-vis du bruit est constitué par un élément de ressort (52) possédant une constante d'élasticité qui permet seulement de faibles variations de longueur lors de l'action de la force d'inertie en fonction d'un déplacement de la caméra cinématographique au niveau du point du centre de gravité de la caméra intérieure (2) et/ou d'une composante de la force de pesanteur provoquant une modification de position de l'ensemble de la caméra cinématographique, et par un élément transducteur (51) qui est disposé parallèlement à l'élément de ressort (52) et comporte une rigidité propre faible par rapport à l'élément de ressort (52) et peut être commandé de telle sorte que la longueur totale de l'élément de liaison actif (5,51,52,53) réalisant une isolation vis-à-vis du bruit est modifiée.

5. Caméra cinématographique selon la revendication 4, **caractérisée en ce que** l'élément transducteur (51) est constitué par un transducteur électromagnétique, électrostrictif, magnétostrictif ou piézoélectrique et que l'élément de liaison actif (5,51,52,53), réalisant une isolation vis-à-vis du bruit est constitué par un élément transducteur électromagnétique, électrostrictif, magnétostrictif ou piézoélectrique possédant une rigidité propre suffisamment élevée, dont la longueur et par conséquent la longueur de l'ensemble de l'élément de liaison actif (5,51,52,53) qui réalise une isolation vis-à-vis du bruit, peuvent être modifiées par une commande appropriée, au moyen d'un circuit de commande (6), qui comporte au moins un élément formant capteur (61 à 65), un élément de filtre (66), qui transmet à partir du ou des signaux de capteur uniquement les composantes ayant des fréquences supérieures, ainsi qu'un circuit d'évaluation (60), qui produit un signal de commande (AS) pour l'élément transducteur (51) de l'élément de liaison actif (5,51,52,53).

6. Caméra cinématographique selon la revendication 5, **caractérisée en ce que** l'élément formant capteur est constitué par un capteur de force (61,62,64,65) possédant une rigidité propre élevée et qui détecte la force de cisaillement entre la caméra intérieure (2) et l'élément de liaison actif (5) réalisant une isolation vis-à-vis du bruit et/ou entre l'élément de liaison actif (5) réalisant une isolation vis-à-vis du bruit et le boîtier (1) de caméra et/ou entre le boîtier de caméra (1) et une masse de référence (71 ou 72) et/ou entre la caméra intérieure (2) et une masse de référence (71).

7. Caméra cinématographique selon la revendication 5, **caractérisée en ce que** l'élément de capteur est constitué par un capteur de mesure de longueur (63), qui détecte la distance (1) entre la caméra intérieure (2) et le boîtier de caméra (1) ou la longueur de l'élément de liaison actif (5) qui réalise une isolation vis-à-vis du bruit.

8. Caméra cinématographique selon l'une des revendications 4 à 7, **caractérisée en ce que** l'élément transducteur (52) sert également, par l'intermédiaire d'un circuit de multiplexage, de capteur de force ou de mesure de longueur.

9. Caméra cinématographique selon la revendication 5, **caractérisée en ce que** le circuit d'évaluation (60) est constitué par un processeur, qui, à partir de la variation de la force F₁, qui varie périodiquement avec la fréquence de fonctionnement et la fréquence d'images et ses multiples et agit sur la caméra intérieure (2), en tenant compte du système oscillant, qui se compose des masses de la caméra intérieure (2), du boîtier de caméra (1) et de la rigidité propre de l'élément actif (5) réalisant une isolation vis-à-vis du bruit, et à partir de là, extrapole le comportement d'oscillation du système oscillant dans l'hypothèse où l'élément actif (5) réalisant une isolation vis-à-vis du bruit, possède une rigidité infiniment faible.

10. Caméra cinématographique selon la revendication 9, **caractérisée en ce que** le signal de commande (AS) délivré par le processeur (60) est déterminé pour l'élément transducteur (51) de l'élément de liaison actif (5) réalisant une isolation vis-à-vis du bruit par détection du déplacement oscillatoire de la caméra intérieure (2) par les éléments formant capteurs, dans le cas d'une suspension très souple et d'une excitation avec la force F₁ qui varie périodiquement avec la fréquence de fonctionnement et la fréquence d'images ou leur multiple et agit sur la caméra intérieure, et est mémorisée dans une mémoire de tableaux.

11. Caméra cinématographique selon l'une des revendications 9 et 10, **caractérisée en ce que** le déplacement de la caméra intérieure (2) est détecté pendant l'état de fonctionnement de telle sorte que pendant la durée de la détection, l'élément de liaison actif (5), qui réalise une isolation vis-à-vis du bruit, est remplacé par un ressort très mou et la force d'excitation F₁ dans des conditions de fonctionnement différentes de la caméra cinématographique est mémorisée dans une mémoire de tableaux du processeur (60).

12. Caméra cinématographique selon l'une des revendications 9 à 11, **caractérisée en ce que** le déplacement de la caméra intérieure (2) s'effectue séparément de la caméra cinématographique de telle sorte que la caméra intérieure (2) est suspendue d'une manière très souple et que ses déplacements sont mesurés et mémorisés dans l'état de fonctionnement.

13. Caméra cinématographique selon l'une des revendications 5 à 12, **caractérisée en ce qu'**après la délivrance du signal de commande (AS) à l'élément de liaison actif (5), qui réalise une isolation vis-à-vis du bruit, la force de cisaillement entre le boîtier de caméra (1) et l'élément de liaison actif (5) réalisant une isolation vis-à-vis du bruit ou entre l'élément de liaison actif (5) réalisant une isolation vis-à-vis du bruit et la caméra intérieure (2) est détectée et la qualité du réglage de l'élément de liaison (5) réalisant une isolation vis-à-vis du bruit est contrôlée.

14. Caméra cinématographique selon l'une des revendications 6 à 13, **caractérisée en ce que** l'obtention du signal de commande (AS) pour la liaison active (5), réalisant une isolation vis-à-vis du bruit, à partir de la valeur modélisée numériquement de la force d'excitation F₁ est optimisée au moyen d'une répétition multiple du calcul, notamment que les paramètres du modèle sont modifiés en fonction d'un algorithme, et que le signal de commande ainsi obtenu (AS) est modifié de telle sorte que les oscillations, qui sont provoquées par la force F₁ variable ayant une fréquence plus élevée, sont compensées par l'élément de liaison actif (5) réalisant une isolation vis-à-vis du bruit au point qu'il ne produit aucune transmission de la force d'excitation au boîtier de caméra (1).

15. Caméra cinématographique selon l'une des revendications 2 à 14, **caractérisée en ce que** l'élément de liaison actif est constitué par trois éléments de liaison actifs (51,52,53) réalisant une isolation vis-à-vis du bruit et dont les axes, dont la longueur est variable, sont parallèles à l'axe optique (X) de la caméra cinématographique et sont disposés à une même distance respective du centre de gravité de la caméra intérieure (2).

16. Caméra cinématographique selon la revendication 15, **caractérisée en ce que** la caméra intérieure (2) et le boîtier de caméra (1) sont reliés entre eux par l'intermédiaire d'autres éléments élastiques (81,82,83) dont la rigidité est inférieure d'un multiple à la rigidité propre des éléments de liaison actifs (51,52,53) réalisant une isolation vis-à-vis du bruit et que les éléments de liaison actifs (51,52,53) réalisant une isolation vis-à-vis du bruit et les autres éléments de liaison élastiques (81,82,83) sont disposés de telle sorte que la position de la caméra intérieure (2) par rapport au boîtier de caméra (1) est déterminée au moins de façon statique dans tous les degrés de liberté, les autres éléments de liaison élastiques (81,82,83) réalisant une isolation vis-à-vis du bruit étant disposés de préférence entre la caméra intérieure (2) et le boîtier de caméra (1) dans la direction d'action qui ne s'étend pas parallèlement à l'axe optique (X) .

17. Caméra cinématographique selon l'une des revendications précédentes, **caractérisée en ce que** le boîtier de caméra (1) est divisé en un boîtier principal (10) et en une plaque de support (11), sur laquelle est monté le dispositif de fixation d'objectif (4), que le boîtier principal (10) et la plaque de support (11) sont reliés entre eux par l'intermédiaire d'éléments de liaison élastiques mous (9), que la caméra intérieure (2) est reliée à la plaque de support (11) par l'intermédiaire d'au moins un élément de liaison actif (5), réalisant une isolation isolée du bruit, dans la direction de l'axe optique (X) et que le boîtier principal (10) est relié à la caméra intérieure (2) par l'intermédiaire de plusieurs éléments de liaison élastiques mous (8).
